# EUROPEAN PATENT SPECIFICATION

(11) **EP 1 842 475 B1**
(45) Date of publication and mention of the grant of the patent: **05.10.2011**
(21) Application number: 06126214.3
(22) Date of filing: 15.12.2006
(51) Int. Cl.: A47L 9/16

(54) **A Second-Stage Separator Device For A Vacuum Cleaner**
Zweite Sortiervorrichtung für einen Staubsauger
Dispositif de séparation de deuxième étape pour aspirateur

(30) Priority: 06.04.2006 CN 200620072211 U
(43) Date of publication of application: 10.10.2007
(73) Proprietor: Suzhou Kingclean Floorcare Co., Ltd., Jiangsu 215009 (CN)
(72) Inventor: Ni, Zugen, 215009, Jiangsu (CN)
(74) Representative: Bergmeier, Werner

(56) References cited:
- EP-A1- 0 489 565
- EP-A2- 0 923 992
- EP-A2- 1 520 505
- WO-A-2006/125945
- BE-A1- 896 371
- GB-A- 2 372 470
- US-A1- 2003 200 736

## Description

### Technical field

The present invention relates to a second-stage separator device for a vacuum cleaner as described in the preamble of claim 1, and a vacuum cleaner comprising the same.

### Background of invention

China Patent No.ZL02220336.2, which was issued on March 5, 2003 by the SIPO of the People's Republic of China, discloses a deceleration centrifugal device for a dust cleaner which comprises a cylindrical barrel with an exhaust tube and an inlet tube for air, a conical barrel and a dust collecting box, which are joined together from the top down in succession, said conical barrel provided with a small upper end and a large bottom end, an umbrella reflecting plate being provided inside the conical barrel below the exhaust tube, a cir cumfluence hole being disposed in the center of the umbrella reflecting plate, an annular gap for dust dropping being formed between the circumferential edge of the umbrella reflecting plate and the side wall of the conical barrel; said device has characteristics of small loss in air pressure, good suction effect, high dust-filtering precision, low operation noise and being able to avoid the secondary air pollution effectively, especially for the secondary filtering system and for separating fine dust.

However, due to only one air inlet in the above-mentioned separator device, it is difficult to enlarge the area of the air inlet, which has become the primary cause that restrains the increase of the air volume of the dust cleaner.

EP 0 489 565 A1 further discloses a shroud and cyclonic cleaning apparatus incorporating same. According to the invention, a disc-shaped shroud having a cylindrical section adjacent to an inner surface of a cyclonic container is described, whereas the container includes a preferred combined shroud disc unit for use in a dual inner and outer cyclonic vacuum cleaner. The combined shroud and disc unit fits on the outside surface of the inner cyclone and aids in removal of first and fibrous matter from the airflow in the outer cyclone. Improved airflow between the outer cyclone and inner cyclone is achieved because of the shroud and disc unit.

### Summary of the invention

An object of the present invention is to provide a second-stage separator device for a vacuum cleaner, for increasing the air inlet area of the dust cleaner and improving the dust-removal efficiency of the dust cleaner.

To achieve the above object, a dust separating apparatus according to claim 1 is realised. The present invention comprises: a low efficiency cyclone with a tangential import having a prefilter initially separating coarse contaminants; and a high efficiency cyclone secondarily separating fine contaminants not separated by the prefilter and arranged into said low efficiency cyclone for comprising: a conduit having a plurality of said air inlets and an air outlet; said air inlets disposed within said prefilter downstream from the first cyclone and upstream of the second cyclone and each arranged in a tangential manner; a conical barrel connected with said conduit for forming a helical flow thereof; and a dust collector attached to a lower end of said conical cylinder for collecting fine contaminants.

Preferably, said air inlets are located on a top end of said high efficiency cyclone.

Furthermore, each air inlet is arranged in a different axial direction.

Additionally, said conduit is manufactured integrally with the conical cylinder.

Still preferably, each air inlet is tangential to an axis of said air outlet.

The advantages of the present invention are as follows:
1. On the basis of the prior art separator device, the present invention adds an air inlet, for increasing the air inlet area so that the air volume is evidently increased, compared with the prior art device, and the dust-removal efficiency is improved.
2. The present invention uses two involute air inlets. With the same inlet area, the width of the inlet can be reduced, therefore the dust airflow keeps relatively far away from the central area when being sucked into dust-removal device. Under the same centrifugal force, the shorter the distance that the dust moves towards the wall, the more advantageous it is for the separating efficiency.

### Brief description of the drawings

The present invention will be further described in the following in combination with the exemplary embodiments and with reference to the accompanying drawings.
- **Figure 1**: is a front view of the prior art device;
- **Figure 2**: is a top view of the cylindrical barrel in figure 1;
- **Figure 3**: is an exploded perspective view of the vacuum cleaner of the present invention;
- **Figure 4**: is a front view of the vacuum cleaner in figure 3;
- **Figure 5**: is a right view of the vacuum cleaner in figure 3;
- **Figure 6**: is a front view of the separator device of the present invention;
- **Figure 7**: is a top view of the cylindrical barrel of the separator in figure 6;
- **Figure 8**: is an assembly view of the dust-removal device provided with the separator device according to the present invention;
- **Figure 9**: is an overall view of the dust-removal device provided with the separator device according to the present invention.

### Embodiment

The preferred embodiment of the present invention is described in its use with a vacuum cleaner and in particular an upright vacuum cleaner. It will be appreciated that the improvements in multi-stage separation described herein may be used with canister vacuum cleaners, back pack vacuum cleaners, central vacuum cleaner systems as well as single and multi-stage separators of any sort, including industrial dust or particle collection systems wherein particles are to be removed from a fluid (i.e. a liquid and/or a gas).

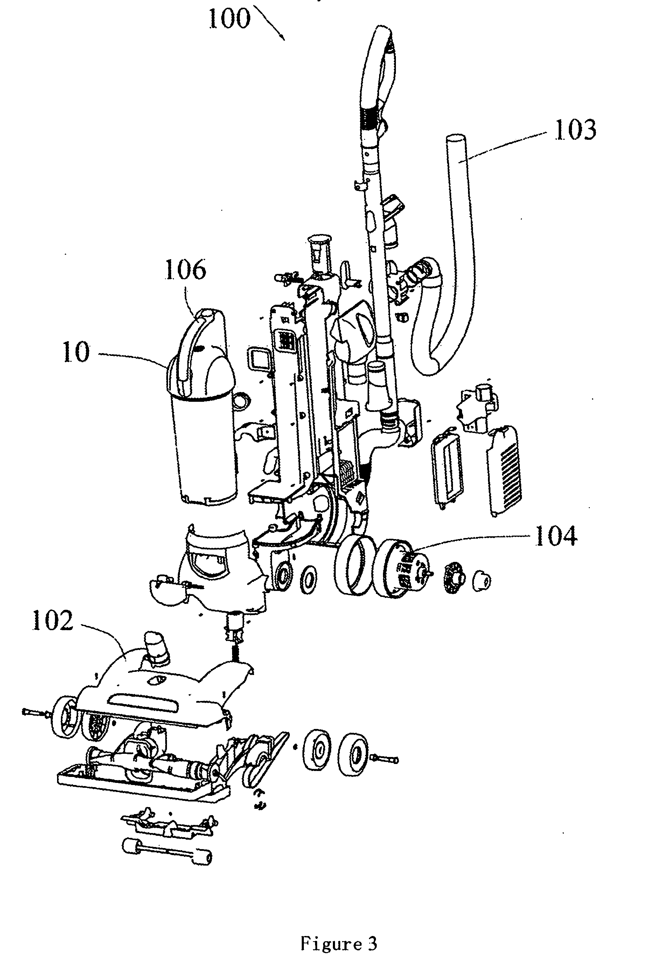

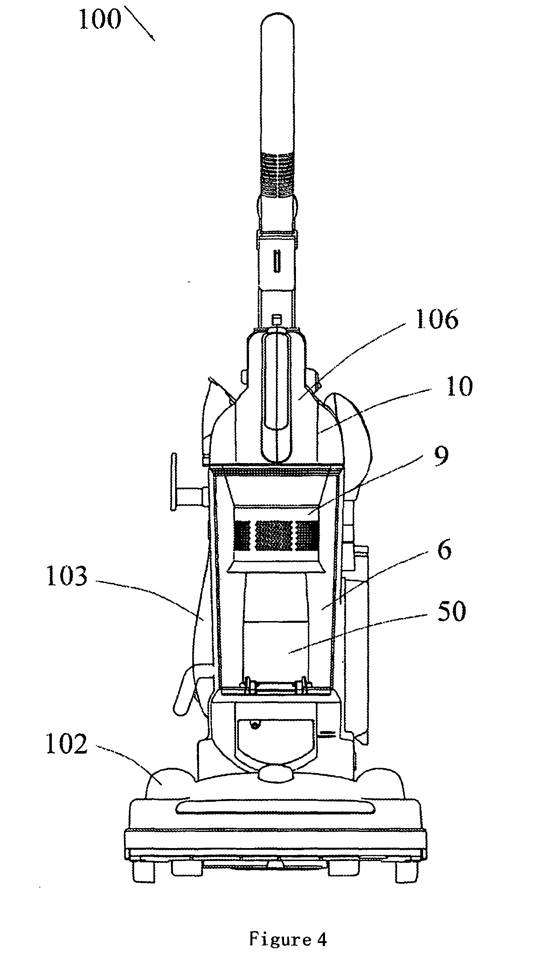

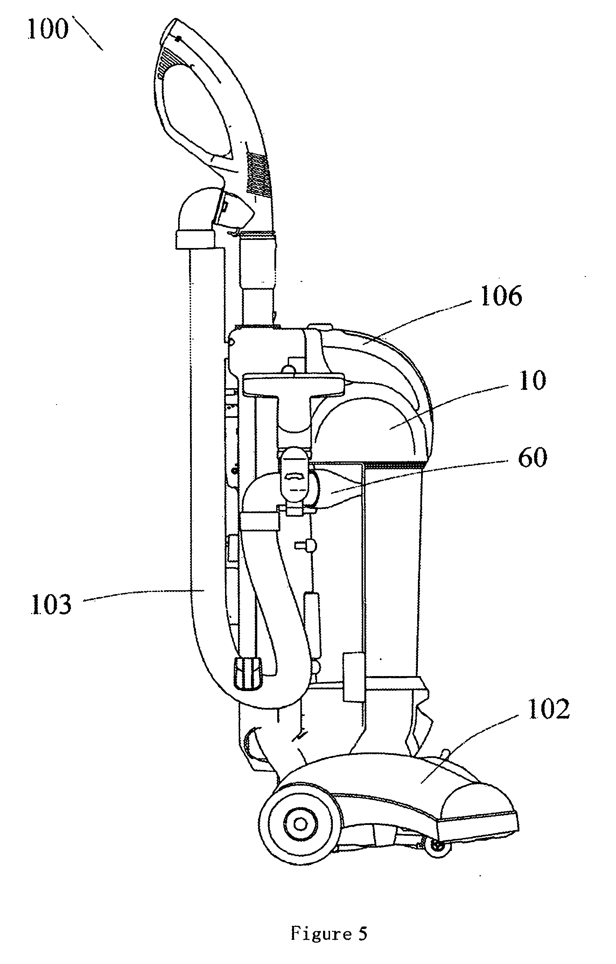

As shown in Fig. 3-5, The upright vacuum cleaner 100 usually comprise a nozzle 102 for introducing a dust containing air stream, a motor 104 for providing a suction source, a dust separating apparatus 106 for separating coarse and fine contaminants from the dust containing air stream and a hose 103 connected with the nozzle 102 through the dust separating apparatus 106 for transferring the dust containing air stream. The dust separating apparatus 106 comprises a first cyclone or a first-stage separator 6, a second cyclone or a second-stage separator device 50 and an air flow path (not labeled) extending downstream from the dirty air inlet 60 to the clean air outlet 12 and in flow communication with the motor 104.

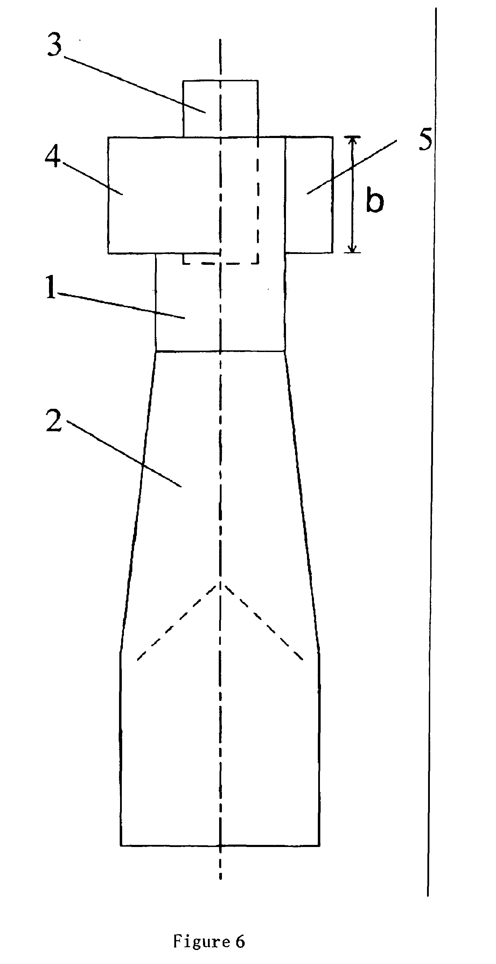

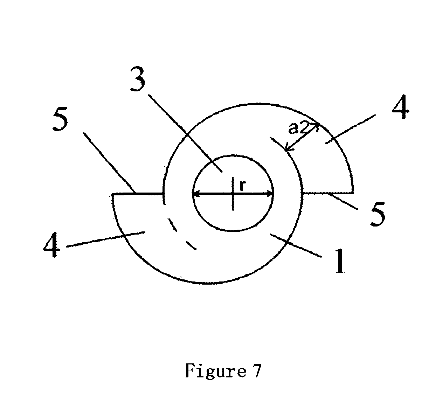

As shown in Fig. 6 and Fig. 7, a second-stage separator device 50 for the vacuum cleaner 100, comprises a cylindrical barrel 1 and a conical barrel 2 that are vertically joined together, an exhaust tube 3 coaxially disposed inside the cylindrical barrel 1, two air inlets 4 being connected to the side wall of sail cylindrical barrel 1, each of which has an involute central line and a rectangular longitudinal section. The air inlets 4 being disposed on the cylindrical barrel 1 at the same height and staggered 180°in the circumference, with air inlets 5 being coaxially disposed in the common plane through the axis line of the cylindrical barrel 1 and orientated oppositely.

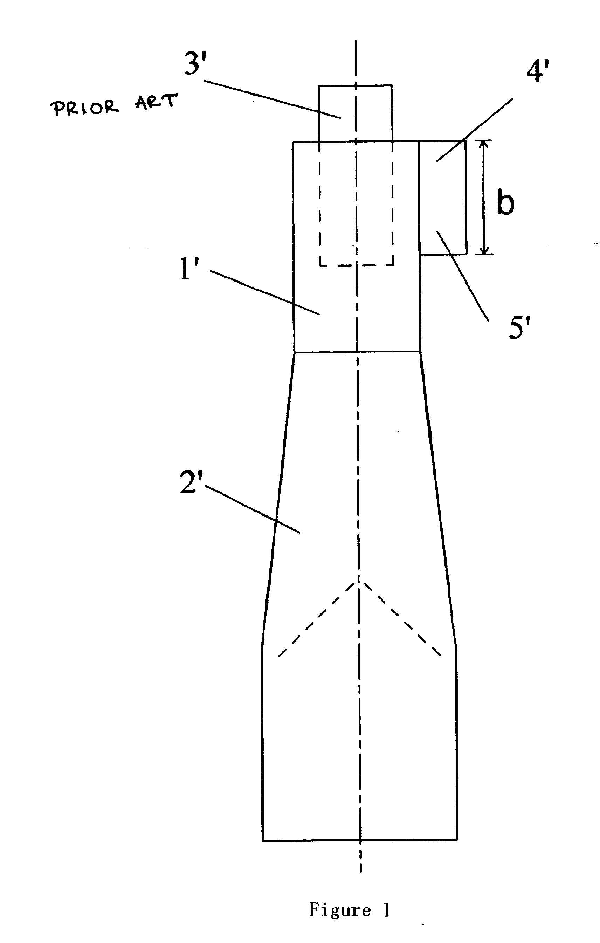

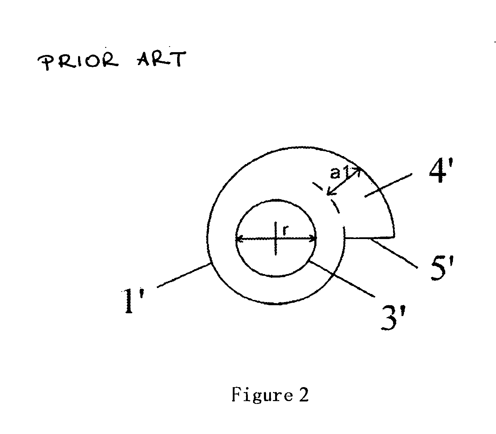

As shown in Fig. 1 and 2, in the prior art device, the width of the air inlet 4' is a₁, the height thereof is b, so that the area m₁ is equal to a₁×b, herein the area m₁ becomes a bottleneck for the device which restrict the air volume, and the prerequisite here lies in that the area m₁ is less than the area πr² of the exhaust tube 3', which depends on the structure of the dust cleaner.

As shown in Fig.6 and 7, in order to increase the air inlet area, the present invention adopts a structure with two air inlets, and the air inlet area m₂ is then equal to 2a₂×b, which is increased relative to that of the prior art device. At the same time, the outlet of the exhaust tube becomes the bottleneck for the device, if the area m₂ is greater than the area πr² of the exhaust tube. Under the prerequisite for ensuring the dust-removal efficiency, the air volume of the device can be increased by the diameter increase of the exhaust tube 3.

In addition, with the same air inlet area and the same height of the air inlets, the width a₂ can be reduced, i.e. a₂ is only half of a₁. Thus when the dust airflow is sucked into the body of the dust-removal device, it can keep far away from the center and accordingly contribute to improving the dust-removal efficiency.

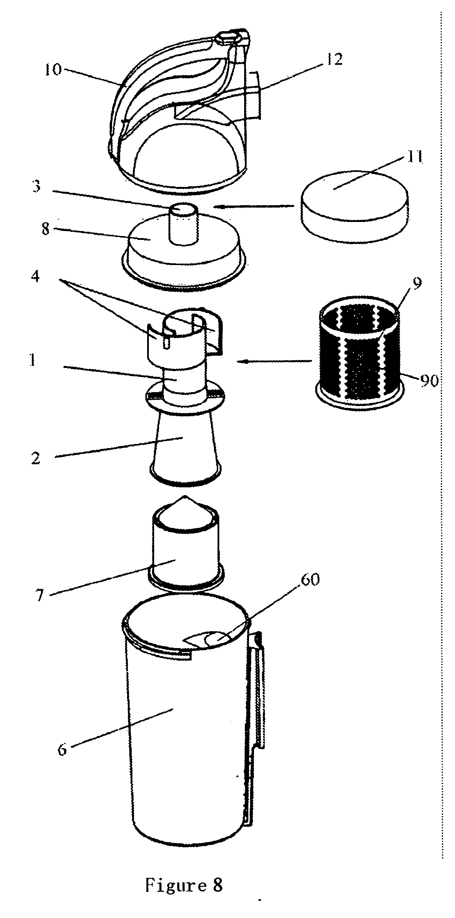

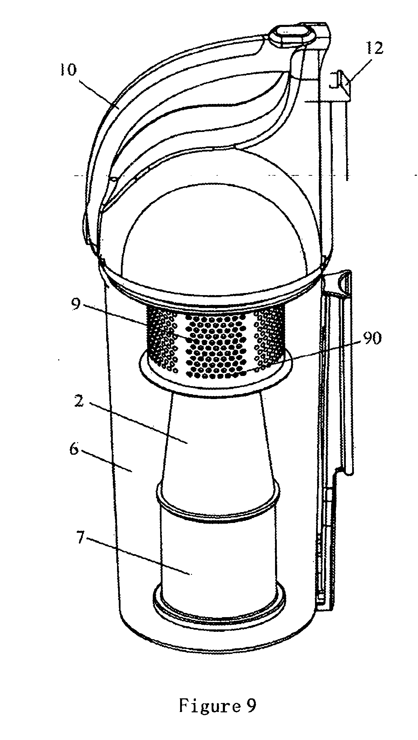

Referring to Figs. 8 and 9, a dust separating apparatus mounted with a second-stage separator device 50 with a pair of air inlets 4 according to the present invention, comprises a cylinder tank 6 with a cover lid 10, a cylindrical barrel 1 and a conical barrel 2 both of which are mounted within the cylinder tank 6. A dust collector 7 located below the conical barrel 2 is also provided within the cylinder tank 6. A cylinder filter cover 9, also named as a prefilter that has a plurality of pores 90 formed on the outer periphery thereof is coaxially arranged outside of the cylindrical barrel 1, and the cylindrical barrel 1 and the cylinder filter cover or prefilter 9 are covered by a top cover 8 on which the exhaust tube 3 is provided. Additionally, there is still a third filter 11 for further filtering the air flow, such as a piece of sponge, disposed on the top cover 8 for covering the exhaust tube 3 to filter the air flow before flowing out through the outlet 12 on one side of the cover lid 10.

In operation, dust containing air stream may be introduced into the cylinder tank 6 by any means known in the art from an tangential import 60 thereon, and is filtered initially by the prefilter 9. Because the coarse contaminants can not enter into the pores 90, the coarse contaminants drop downwardly while the air stream with the fine contaminants enters into the pores 90.When the air stream with fine contaminants enters into the cylindrical barrel 1 through the tangential air inlet 4 and then is secondarily filtered in the conical barrel 2 which has an upper end and a lower end wider than the upper end to separate fine contaminants not separated by the prefilter 9, and the air stream moves upwardly through exhaust tube 3. The filter 11 disposed on exhaust tube 3 will conduct the third filtering for the air stream being about to be guided into the motor 104 of the vacuum cleaner 100 and lastly discharged into the atmosphere.

In this embodiment, the pair of air inlets 4 are provided in the dust separating apparatus 106, more air inlets can also be considered for further increasing the flow amount to meet variable requirements.

The present invention can be applied to various type of the vacuum cleaners, and particularly, to the cyclonic vacuum cleaner so that convenience of use can be further improved.

It is to be understood, however, that even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A dust separating apparatus (106) for a vacuum cleaner comprising:
a first cyclone (6) with a tangential import (60) having a prefilter (9) initially separating coarse contaminants; and
a second cyclone (50) secondarily separating fine contaminants not separated by the prefilter (9) and arranged into said first cyclone (6) for comprising:
a conduit (1) having a plurality of air inlets (4) each arranged in a tangential manner and as air outlet;
a conical barrel (2) connected with a lower end of said conduit for forming a helical flow thereof; and
a dust collector (7) attached to a lower end of said conical barrel (2) for collecting fine contaminants, **characterized in that** said air inlets (4) are positioned in the air flow path downstream from the first cyclone and upstream of the second cyclone and **in that** said air inlets (4) are disposed within said prefilter (9).

2. A dust separating apparatus as claimed in claim 1, **characterized in that** a top cover (8) covers said conduit and comprises an exhaust tube (3).

3. A dust separating apparatus as claimed in claim 1, **characterized in that** said conduit (1) is manufactured integrally with the conical cylinder (2).

4. A dust separating apparatus as claimed in claim 1, **characterized in that** each air inlet (4) is arranged in a different direction.

5. A dust separating apparatus as claimed in claim 3, **characterized in that** a top end of said exhaust tube (3) is covered by a third filter (11) for further filtering.

6. A dust separating apparatus as claimed in claim 1, **characterized in that** the second cyclone (50) has an upper end and a lower end wider than the upper end.

7. A vacuum cleaner comprising:
a dirty air import (60) for receiving dust containing air stream;
a clean air outlet (12) spaced for the dirty air import;
an air flow path extending downstream from the dirty air inlet (60) to the clean air outlet (12) and in flow communication with a source of suction; and a dust separating apparatus (106) positioned in the air flow path, said dust separating apparatus comprising:
a first cyclone (6) with a tangential import (60) having a prefilter (9) initially separating coarse contaminants; and
a second cyclone (50) secondarily separating fine contaminants not separated by the prefilter (9) and arranged into said first cyclone (6) for comprising:
a conduit (1) having a plurality of air inlets (4) each arranged in a tangential manner and an air outlet (3);
a conical barrel (2) connected with a lower end of said conduit for forming a helical flow thereof; and
a dust collector (7) attached to a lower end of said conical barrel (2) for collecting fine contaminants, **characterized in that** said air inlets (4) are positioned in the air flow path downstream from the first cyclone and upstream of the second cyclone and disposed within said prefilter (9).

8. A vacuum cleaner as claimed in claim 8, **characterized in that** the second cyclone (50) has an upper end and a lower end wider than the upper end.

9. A vacuum cleaner as claimed in claim 8, **characterized in that** said air inlets (4) have an involute central line and a rectangular longitudinal section.

## Patentansprüche

1. Staubabtrennvorrichtung (106) für einen Staubsauger, umfassend:
einen ersten Zyklon (6) mit einem tangentialen Einlass (60) mit einem Vorfilter (9), das zuerst groben Schmutz abtrennt; und
einen zweiten Zyklon (50), der sekundär feinen, nicht durch das Vorfilter (9) abgetrennten Schmutz abtrennt und in dem ersten Zyklon (6) angeordnet ist, wobei er umfasst:
einen Kanal (1) mit einer Vielzahl von jeweils in einer tangentialen Weise angeordneten Lufteinlässen (4) und einen Luftauslass,
eine konische Trommel (2), die mit einem unteren Ende des Kanals verbunden ist, um eine schraubenförmige Strömung davon auszubilden; und
einen Staubsammler (7), der an einem unteren Ende der konischen Trommel (2) zum Sammeln feinen Schmutzes angebracht ist, **dadurch gekennzeichnet,**
**dass** die Lufteinlässe (4) in dem Luftströmungsweg stromab von dem ersten Zyklon und stromauf von dem zweiten Zyklon positioniert sind, und dass die Lufteinlässe (4) in dem Vorfilter (9) angeordnet sind.

2. Staubabtrennvorrichtung nach Anspruch 1, **dadurch gekennzeichnet, dass** eine obere Abdeckung (8) den Kanal abdeckt und ein Abluftrohr (3) enthält.

3. Staubabtrennvorrichtung nach Anspruch 1, **dadurch gekennzeichnet, dass** der Kanal (1) einstückig mit dem konischen Zylinder (2) gefertigt ist.

4. Staubabtrennvorrichtung nach Anspruch 1, **dadurch gekennzeichnet, dass** jeder Lufteinlass (4) in einer unterschiedlichen Richtung angeordnet ist.

5. Staubabtrennvorrichtung nach Anspruch 3, **dadurch gekennzeichnet, dass** ein oberes Ende des Abluftrohrs (3) durch ein drittes Filter (11) zum weiteren Filtern abgedeckt ist.

6. Staubabtrennvorrichtung nach Anspruch 1, **dadurch gekennzeichnet, dass** der zweite Zyklon (50) ein oberes Ende sowie ein unteres Ende aufweist, das weiter ist als das obere Ende.

7. Staubsauger, umfassend:
einen Einlass (60) für schmutzige Luft zum Empfangen eines Staub enthaltenden Luftstroms;
einen Auslass (12) für saubere Luft mit Abstand zum Einlass für schmutzige Luft;
einen Luftströmungsweg, der sich stromab von dem Einlass (60) für schmutzige Luft zum Auslass (12) für saubere Luft erstreckt und in Strömungsverbindung mit einer Saugquelle steht; und eine Staubabtrennvorrichtung (106), die im Luftströmungsweg positioniert ist, wobei die Staubabtrennvorrichtung umfasst:
einen ersten Zyklon (6) mit einem tangentialen Einlass (60) mit einem Vorfilter (9), das zuerst groben Schmutz abtrennt; und
einen zweiten Zyklon (50), der sekundär feinen, nicht durch das Vorfilter (9) abgetrennten Schmutz abtrennt und in dem ersten Zyklon (6) angeordnet ist, wobei er umfasst:
einen Kanal (1) mit einer Vielzahl von jeweils in einer tangentialen Weise angeordneten Lufteinlässen (4) und einen Luftauslass (3);
eine konische Trommel (2), die mit einem unteren Ende des Kanals verbunden ist, um eine schraubenförmige Strömung davon auszubilden; und
einen Staubsammler (7), der an einem unteren Ende der konischen Trommel (2) zum Sammeln feinen Schmutzes angebracht ist, **dadurch gekennzeichnet,**
**dass** die Lufteinlässe (4) in dem Luftströmungsweg stromab von dem ersten Zyklon und stromauf von dem zweiten Zyklon positioniert sind und in dem Vorfilter (9) angeordnet sind.

8. Staubsauger nach Anspruch 8, **dadurch gekennzeichnet, dass** der zweite Zyklon (50) ein oberes Ende sowie ein unteres Ende aufweist, das weiter ist als das obere Ende.

9. Staubsauger nach Anspruch 8, **dadurch gekennzeichnet, dass** die Lufteinlässe (4) eine Evolventen-Mittellinie und einen rechteckigen Längsschnitt aufweisen.

## Revendications

1. Appareil de séparation de poussières (106) pour un aspirateur, comportant :
un premier cyclone (6) avec une admission tangentielle (60) possédant un préfiltre (9), la séparation initiale des contaminants grossiers ; et
un second cyclone (50) séparant secondairement les contaminants fins qui n'ont pas été séparés par le préfiltre (9) et disposé dans ledit premier cyclone (6), comportant :
un conduit (1) possédant une multitude d'orifices d'admission d'air (4) disposés chacun de manière tangentielle et un orifice de sortie d'air,
un cylindre conique (2) connecté avec une extrémité inférieure dudit conduit pour former un écoulement hélicoïdal de ce dernier ; et
un collecteur de poussières (7) attaché à une extrémité inférieure dudit cylindre conique (2) pour collecter les contaminants fins, **caractérisé en ce**
**que** lesdits orifices d'admission d'air (4) sont positionnés dans le chemin d'écoulement d'air en aval du premier cyclone et en amont du second cyclone et en ce que lesdits orifices d'admission d'air (4) sont disposés au sein dudit préfiltre (9).

2. Appareil de séparation de poussières selon la revendication 1, **caractérisé en ce qu'**un revêtement supérieur (8) couvre ledit conduit et comporte un tube d'échappement (3).

3. Appareil de séparation de poussières selon la revendication 1, **caractérisé en ce que** ledit conduit (1) est intégralement fabriqué avec le cylindre conique (2).

4. Appareil de séparation de poussières selon la revendication 1, **caractérisé en ce que** chaque orifice d'admission d'air (4) est disposé dans une direction différente.

5. Appareil de séparation de poussières selon la revendication 3, **caractérisé en ce qu'**une extrémité supérieure dudit tube d'échappement (3) est couverte par un troisième filtre (11) pour un filtrage plus fin.

6. Appareil de séparation de poussières selon la revendication 1, **caractérisé en ce que** le second cyclone (50) possède une extrémité supérieure et une extrémité inférieure plus large que l'extrémité supérieure.

7. Aspirateur de nettoyage, comportant :
une admission d'air sale (60) pour recevoir un courant d'air contenant la poussière ;
un orifice de sortie d'air propre (12) distancé de l'admission d'air sale ;
un chemin d'écoulement d'air s'étendant en aval de l'orifice d'admission d'air sale (60) vers l'orifice de sortie d'air propre (12) et en communication fluidique avec une source de succion ; et un appareil de séparation de poussières (106) positionné dans le chemin d'écoulement d'air, ledit appareil de séparation de poussières comportant :
un premier cyclone (6) avec une admission tangentielle (60) possédant un préfiltre (9) séparant initialement les contaminants grossiers ; et,
un second cyclone (50) séparant secondairement les contaminants fins qui n'ont pas été séparés par le préfiltre (9) et disposé dans ledit premier cyclone (6), comportant :
un conduit (1) possédant une multitude d'orifices d'admission d'air (4) disposés chacun de manière tangentielle et un orifice de sortie d'air (3),
un cylindre conique (2) connecté avec une extrémité inférieure dudit conduit pour former un écoulement hélicoïdal de ce dernier ; et
un collecteur de poussières (7) attaché à une extrémité inférieure dudit cylindre conique (2) pour collecter les contaminants fins, **caractérisé en ce**
**que** lesdits orifices d'admission d'air (4) sont positionnés dans le chemin d'écoulement d'air en aval du premier cyclone et en amont du second cyclone et disposés au sein dudit préfiltre (9).

8. Aspirateur de nettoyage selon la revendication 8, **caractérisé en ce que** le second cyclone (50) possède une extrémité supérieure et une extrémité inférieure plus large que l'extrémité supérieure.

9. Aspirateur de nettoyage selon la revendication 8, **caractérisé en ce que** lesdits orifices d'admission d'air (4) possèdent une ligne centrale développante et une section longitudinale rectangulaire.
